(19) Europäisches Patentamt / European Patent Office / Office européen des brevets

(11) **EP 3 184 836 B1**

(12) **EUROPEAN PATENT SPECIFICATION**

(45) Date of publication and mention
of the grant of the patent:
**22.09.2021  Bulletin 2021/38**

(51) Int Cl.:
*F16C 33/64* *(2006.01)*    *F16C 33/62* *(2006.01)*
*F16C 19/52* *(2006.01)*    *F16C 33/34* *(2006.01)*
*F16C 33/58* *(2006.01)*    *F16C 33/32* *(2006.01)*
*G01M 13/045* *(2019.01)*   *G01N 3/32* *(2006.01)*
*G01N 3/34* *(2006.01)*

(21) Application number: **15833377.3**

(22) Date of filing: **10.08.2015**

(86) International application number:
**PCT/JP2015/072690**

(87) International publication number:
**WO 2016/027726 (25.02.2016 Gazette 2016/08)**

(54) **ROLLING COMPONENT, MATERIAL FOR SAME, AND METHOD FOR MANUFACTURING ROLLING COMPONENT**

WÄLZLAGERKOMPONENTE, MATERIAL DAFÜR UND VERFAHREN ZUR HERSTELLUNG DER WÄLZLAGERKOMPONENTE

ÉLÉMENT DE ROULEMENT, MATÉRIAU POUR CE DERNIER, ET PROCÉDÉ POUR FABRIQUER UN ÉLÉMENT DE ROULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2014   JP 2014165924**

(43) Date of publication of application:
**28.06.2017   Bulletin 2017/26**

(73) Proprietor: **NTN Corporation**
**Osaka-shi, Osaka 550-0003 (JP)**

(72) Inventors:
• **MIWA, Noriaki**
  **Kuwana-shi**
  **Mie 511-0867 (JP)**
• **KAWAMURA, Takayuki**
  **Kuwana-shi**
  **Mie 511-0867 (JP)**
• **SUGISAKI, Yoshinori**
  **Kuwana-shi**
  **Mie 511-0867 (JP)**
• **ITOU, Motohiro**
  **Kuwana-shi**
  **Mie 511-0867 (JP)**

(74) Representative: **Dr. Gassner & Partner mbB**
**Wetterkreuz 3**
**91058 Erlangen (DE)**

(56) References cited:
WO-A1-2011/115101    JP-A- 2006 308 019
JP-A- 2011 191 254    JP-A- 2011 215 136
JP-A- 2011 215 136    JP-A- 2014 122 378
JP-A- 2015 138 018    US-A- 5 108 491

• YUKIO FUJII ET AL.: 'A New Test Method for Mode II Fatigue Crack Growth in Hard Steels' NTN TECHNICAL REVIEW 31 August 2001, pages 53 - 60, XP009500276 Retrieved from the Internet: <URL:http://www.ntn.co.jp/ japan /products/review/pdf/ NTN_TechnicalReview_69.pdf> [retrieved on 2015-10-26]

## Description

CROSS REFERENCE TO THE RELATED APPLICATION

This application is based on and claims Convention priority to Japanese patent application No. 2014-165924, filed August 18, 2014.

BACKGROUND OF THE INVENTION

(Field of the Invention)

The present invention relates to a method for selecting a steel material for a rolling component to be used in an environment in which hydrogen enters steel. In particular, the rolling component is used in an environment in which hydrogen enters steel, for example, used in electrical auxiliary equipment of an automobile, a construction machine, a windmill, or the like. The present invention further relates to a rolling component material therefor, a rolling component, a bearing ring of a rolling bearing and a rolling element of a rolling bearing.

(Description of Related Art)

US 5 108 491 A discloses a steel material for a rolling component material, containing pores and carbides, for a rolling component.

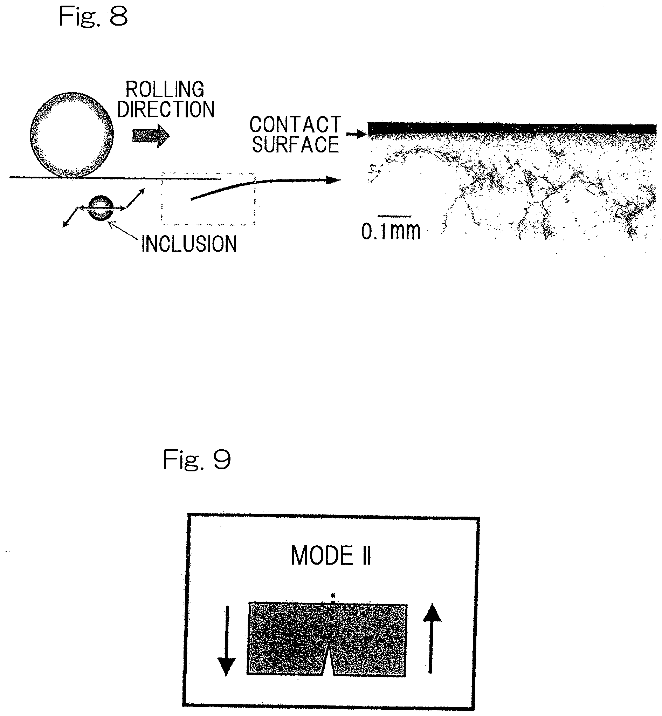

Flaking, which is main breakage form in rolling fatigue, is conventionally thought to be due to repetition of alternate shear stress that is generated under a contact surface by contact stress and is parallel to the surface. The development mode of a fatigue crack in this case is considered as Mode II (in-plane shear mode) (see Fig. 9). Therefore, the Mode II fatigue crack development characteristic of a material that undergoes rolling fatigue is considered as one of important material characteristics that are dominant over rolling fatigue life. Accordingly, accurately obtaining such a characteristic is thought to be for clarifying elucidating the fatigue mechanism and developing a material that is excellent in rolling fatigue resistance characteristic.

As a method for obtaining and rapidly evaluating a Mode II fatigue characteristic, an ultrasonic torsional fatigue test has been known. The ultrasonic torsional fatigue test is carried out in an ordinary environment, but a method of an ultrasonic torsional fatigue test in a hydrogen entry environment has also been suggested (Patent Document 1). When a rolling component such as a bearing ring or a rolling element of a rolling bearing is used, for example, under a condition in which water enters therein, under a condition in which sliding occurs therein, or under a condition in which energization occurs therein, water or a lubricant may be decomposed to generate hydrogen, and early flaking may occur when such hydrogen enters steel.

Hydrogen significantly decreases the fatigue strength of steel. Thus, even under a favorable lubricating condition in which contact elements are separated from each other by an oil film, a crack occurs and develops within a surface layer, in which alternating shear stress is great, leading to early flaking. Therefore, the rolling component, that is used in an environment in which hydrogen enters, needs to undergo a test in a hydrogen entry environment. In an ordinary torsional fatigue test, a long period of time is required for the test. However, the test method disclosed in Patent Document 1 makes it possible that a shear fatigue characteristic in a hydrogen entry environment can be rationally and rapidly evaluated. This test method is an evaluation method in which by charging hydrogen to a test piece and testing the test piece by means of an ultrasonic torsional fatigue test that enables a load to be applied at a very high speed, shear fatigue is applied to the test piece made of a metallic material before the charged hydrogen is scattered, thereby the shear fatigue characteristic is evaluated.

[Related Document]

[Patent Document]

[Patent Document 1] JP Laid-open Patent Publication No. 2011-191254

[Non-Patent Document]

[Non-Patent Document 1] Tedric A. Harris, Rolling Bearing Analysis Fourth Edition, John Wiley & Sons, Inc, New York, (2001) P211

When an ultrasonic torsional fatigue test is carried out in an ordinary environment, a crack occurs on the surface of a test piece. On the other hand, through the result of a research, it is found that a crack occurs in an internal portion of a test piece when hydrogen is charged. This crack occurs due to a non-metallic inclusion within the test piece.

Patent Document 1 suggests a test method for rationally and rapidly evaluating a shear fatigue characteristic in a hydrogen entry environment. However, in the case of rupture by the torsional fatigue test in a hydrogen entry environment, the reason why a crack occurs from an internal non-metallic inclusion shown in Fig. 8 has not been clarified.

That is, in the case of a rolling component to be used in an environment in which hydrogen enters steel, what size of a non-metallic inclusion prevents breakage has not been clarified, and thus appropriate selection of a rolling component to be used in a hydrogen entry environment has not been enabled.

SUMMARY OF THE INVENTION

An object of the present invention is to provide a selection method that enables selection of a rolling component material in which a shear crack does not occur in a rolling component used in an environment under which hydrogen enters steel, a method for manufacturing a rolling component with the use of the selection method, and a rolling component material and a bearing ring and a rolling element of a rolling bearing, manufactured by such a method.

This object is achieved by a method with the steps of claim 1.

An object of the present invention is to provide a steel material for a rolling component to be used in an environment in which hydrogen enters steel, which steel material is a rolling component material that is not broken due to rolling fatigue, and a rolling component and a bearing ring and a rolling element of a rolling bearing, made of such a rolling component material.

A rolling component material according to the present invention is a steel material for a rolling component to be used in an environment in which hydrogen enters steel, wherein a non-metallic inclusion of the steel material has a radius not greater than a radius d determined by the following formula (1) and not less than 1 $\mu$m, where Pmax is a maximum contact surface pressure acting on a rolling surface of the rolling component,

$$d = 64729(Pmax/4)^{-1.441} \quad (1).$$

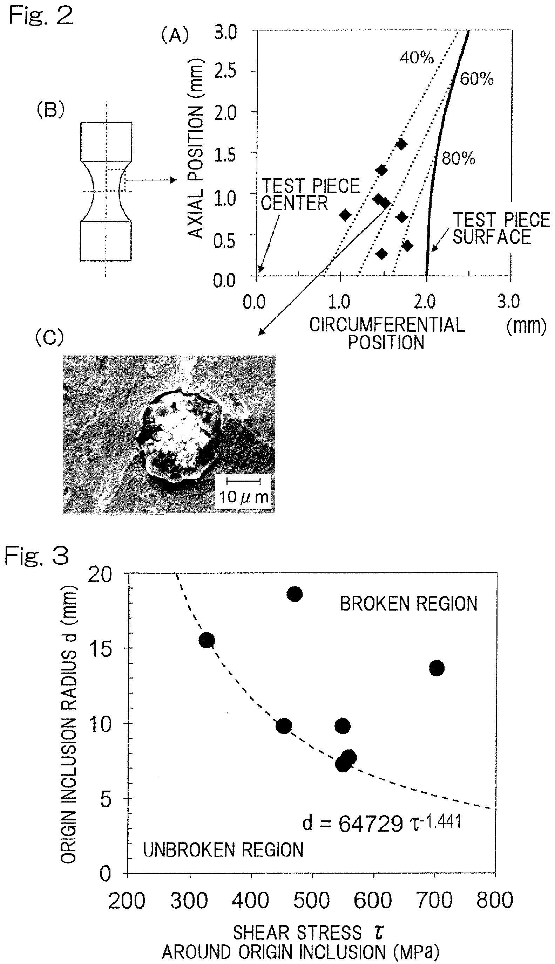

Fig. 3 shows a relationship between: a radius d of a starting-point or origin inclusion of the test piece broken with a subsurface origin in a hydrogen environment; and a stress $\tau$ around the origin inclusion. When a relationship of a lower limit is represented by a formula, a formula (2) is established.

$$d = 64729\tau^{-1.441} \quad (2)$$

The maximum contact surface pressure Pmax and a maximum shear stress $\tau$ have a relationship shown in Fig. 7 (Non-Patent Document 1). When the contact surface pressure is constant, the shear stress is the highest in a line contact state (b/a = 0 wherein "a" represents the major-axis radius of a contact ellipse and "b" represents the minor-axis radius of the contact ellipse). The relationship at this time is represented by a formula (3).

$$\tau = Pmax/4 \quad (3)$$

From the formulas (2) and (3), a fracture-critical inclusion radius at any surface pressure in a hydrogen entry environment is obtained as a formula (1).

$$d = 64729(Pmax/4)^{-1.441} \quad (1)$$

The reason why the radius d of the inclusion is not less than 1.0 $\mu$m is that carbide does not become a starting point or origin and the size of carbide is less than 1.0 $\mu$m.

The "rolling component" is a generic term for mechanical element components each of which makes rolling contact or makes rolling contact with sliding, and examples thereof include a bearing ring and a rolling element of a rolling bearing, a joint component having a raceway groove of a constant velocity joint, a torque transmission ball, and a screw shaft, a nut and a ball of a ball screw. Moreover, the "inclusion" embraces holes. In the case where holes are present therein, a possibility of breakage is the highest.

A rolling component of the present invention is a rolling component using the rolling component material of the present invention. Therefore, even in a hydrogen entry environment, the rolling component is not fractured due to rolling fatigue.

The rolling component of the present invention may be a bearing ring of a rolling bearing, and the maximum contact surface pressure Pmax may be 1.0 GPa. For the bearing ring of the rolling bearing, the maximum contact surface pressure Pmax is determined on the basis of the use thereof, and, for example, in use for electrical auxiliary equipment, the maximum contact surface pressure Pmax is 1.0 GPa. When the maximum contact surface pressure Pmax is determined as described above, the radius d of the inclusion in the above formula (1) is uniquely determined. When the radius of the inclusion is not greater than the determined radius d, a shear crack does not develop in a specific use even in a hydrogen entry environment, and therefore, the bearing ring is not fractured due to rolling fatigue.

A rolling element of a rolling bearing of the present invention is the rolling component of the present invention, and the maximum contact surface pressure Pmax is 1.0 GPa. Similarly as described for the bearing ring, when the radius of the inclusion is not greater than the above radius d, a shear crack does not develop in a specific use even in a hydrogen entry environment, and therefore, the rolling element is not fractured due to rolling fatigue.

The method for selecting a rolling component material according to the present invention is a method for selecting a steel material for a rolling component to be used in an environment in which hydrogen enters steel, the method comprising: determining a maximum contact surface pressure Pmax acting on a rolling surface of the rolling component; and using, as a material for the rolling component, a material whose inclusion has a radius not greater than a radius d determined by the following formula (1) and not less than 1.0 $\mu$m,

$$d = 64729(Pmax/4)^{-1.441} \quad (1).$$

By determining the maximum contact surface pressure Pmax acting on the rolling surface of the rolling component, the radius d of the inclusion is uniquely determined. According to this selecting method, since a material in which the inclusion radius is not greater than the radius d determined as described above is selected, the rolling component using the selected rolling component material is not fractured due to rolling fatigue even when being used in a hydrogen entry environment, similarly as described for the rolling component material of the present invention. The method for selecting a steel material whose inclusion has a radius not greater than the radius d can be carried out by, for example, examining the radius of the inclusion in a micrograph of a cut surface or the like in spot checking or the like for each lot.

A method for manufacturing a rolling component of the present invention is a method for manufacturing a rolling component made of a steel material to be used in an environment in which hydrogen enters steel, the method comprising selecting the steel material by using the method for selecting the rolling component material of the present invention. Therefore, the rolling component manufactured by this manufacturing method is not fractured due to rolling fatigue even when being used in a hydrogen entry environment.

A method for manufacturing a bearing ring of a rolling bearing of the present invention is a method for manufacturing a bearing ring of a rolling bearing to be used in an environment in which hydrogen enters steel, the method comprising selecting a steel material for the bearing ring by the method for selecting the rolling component material of the present invention, wherein the maximum contact surface pressure Pmax = 1.0 GPa. For the bearing ring of the rolling bearing, the maximum contact surface pressure Pmax is determined on the basis of the use thereof, and, for example, in use for electrical auxiliary equipment, the maximum contact surface pressure Pmax is 1.0 GPa. When the maximum contact surface pressure Pmax is determined as described above, the radius d of the inclusion in the above formula (1) is uniquely determined. When the radius of the inclusion is not greater than the determined radius d, the bearing ring is not fractured due to rolling fatigue in a specific use even in a hydrogen entry environment.

A method for manufacturing a rolling element of a rolling bearing of the present invention is a method for manufacturing a rolling element of a rolling bearing to be used in an environment in which hydrogen enters steel, the method comprising selecting a steel material for the rolling element by the method for selecting the rolling component material of the present invention, wherein the maximum contact surface pressure Pmax = 1.0 GPa. Similarly as described for the method for manufacturing the bearing ring, when the radius of the inclusion is not greater than the above radius d, the rolling element is not fractured due to rolling fatigue in a specific use even in a hydrogen entry environment.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:

Fig. 1 includes diagrams (A) to (D) in which the diagram (A) is a chart showing a relationship between a shear stress amplitude and the number of load application at occurrence of a shear crack obtained in a hydrogen-charged ultrasonic torsional fatigue test, the diagram (B) is a picture of a shear crack in a test piece broken from the surface origin, the diagram (C) is an optical microscope photograph of a shear crack occurrence site, and the diagram (D) is a partially enlarged electron microscope photograph of the photograph of the diagram (C);
Fig. 2 shows a chart showing a relationship between the circumferential position and the axial position of a crack occurrence position examined in the test, and an electron microscope photograph of an inclusion;
Fig. 3 is a chart showing a relationship between stress around an origin inclusion and an inclusion radius d;
Fig. 4 is an explanatory diagram of an ultrasonic torsional fatigue tester used in the test;
Fig. 5 is an explanatory diagram showing a hydrogen charging method used in the test;
Fig. 6 is a schematic diagram of a test piece for the test;
Fig. 7 is a chart showing a relationship between a maximum contact surface pressure Pmax and a maximum shear stress $\tau$ in each contact state;
Fig. 8 is an explanatory diagram showing a concept of a relationship between a rolling shear fatigue crack and an inclusion; and
Fig. 9 is an explanatory diagram of a Mode II crack.

DESCRIPTION OF EMBODIMENTS

A rolling component material, a rolling component, a method for selecting the rolling component material, and a method for manufacturing the rolling component according to an embodiment of the present invention will be described with reference to the drawings.

The rolling component material is a steel material for a rolling component to be used in an environment in which hydrogen enters steel, and the radius of a non-metallic inclusion of the steel material is not greater than a radius d determined by the following formula (1) and is not less than 1.0 $\mu$m.

$$d = 64729(Pmax/4)^{-1.441} \quad (1)$$

The "environment in which hydrogen enters steel" means an environment in which water enters or an environment in which sliding easily occurs. When a fresh surface or a newly formed surface of a metal occurs due to sliding, the activity of such a fresh surface is high, and therefore, a lubricant is decomposed to generate hydrogen. In addition, the "rolling component" is a generic term for mechanical element components each of which makes rolling contact or makes rolling contact with sliding as described above, and examples thereof include a bearing ring and a rolling element of a rolling bearing, a joint component having a raceway groove of a constant velocity joint, a torque transmission ball, and a screw shaft, a nut and a ball of a ball screw. Moreover, the "inclusion" may include holes. In the case where holes are present therein, a possibility of breakage is the highest.

Examples of the rolling component to be used in an environment in which hydrogen enters steel include electrical auxiliary equipment (lighting, an air-conditioner, a wiper, a power window, etc.), a construction machine (in particular, a revolving seat and a revolving component thereof), a ball screw of a CVT (continuously variable transmission), a machine tool, a windmill, and an acceleration and deceleration machine.

The reason why the radius d of the inclusion is not less than 1.0 $\mu$m is that carbide does not become a starting point and the size of carbide is less than 1.0 $\mu$m.

The radius d and the stress $\tau$ in a hydrogen entry environment were obtained by a hydrogen-charged ultrasonic torsional fatigue test as described below. A method of the test will be described in detail later.

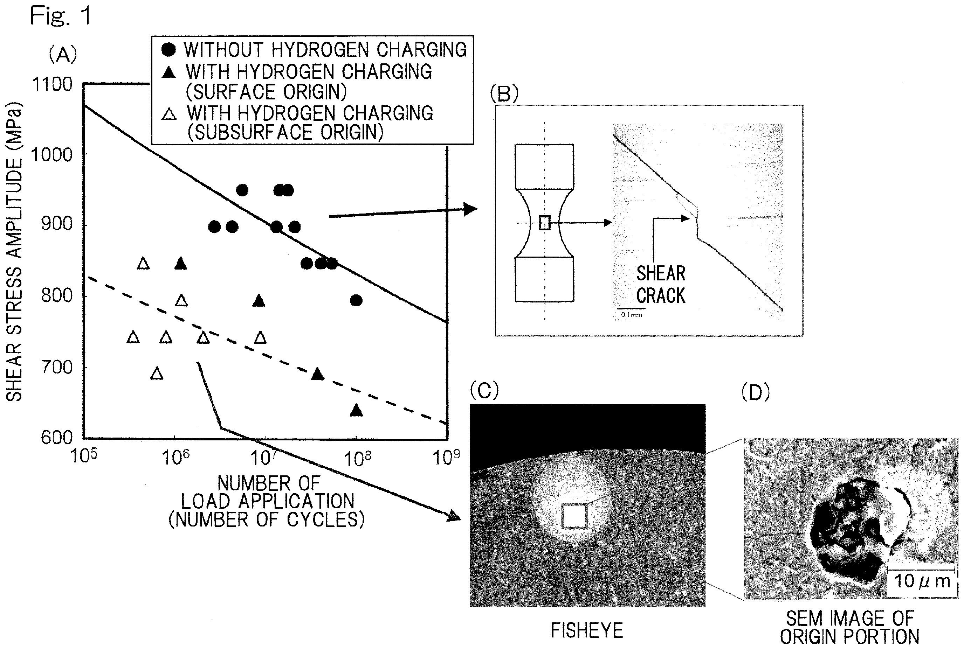

Diagram (A) of Fig. 1 shows the results of the number of load application (number of cycles) and a shear stress amplitude (MPa) when a shear crack occurred as shown in diagram (B) of Fig. 1 by the test. In the diagram (A) of Fig. 1, each plot of a white triangle shows a case where a shear crack, of a subsurface origin, occurred with hydrogen charging, and each plot of a black triangle shows a case where a shear crack, of a surface origin, occurs with hydrogen charging. For comparison, each plot of a black circle shows a case where a shear crack occurred without hydrogen charging.

In an ultrasonic torsional fatigue test in an ordinary environment, a crack occurs from the surface of a test piece. This is because the surface receives greatest stress. However, in the case of the test piece subjected to hydrogen charging, as shown in diagram (A) of Fig. 2, it was found that a crack occurred from an internal portion of the test piece. In diagram (A) of Fig. 2, the horizontal axis and the vertical axis indicate a circumferential position and an axial position, respectively, in the test piece shown in diagram (B) of Fig. 2, and each plotted point indicates the starting position or origin position of a breakage.

A stress at the plotted origin position of each breakage, that is, a stress $\tau$ acting on an origin inclusion is determined by torsional moment applied to the test piece and the distance of the origin position from the center of the test piece. In addition, the size (radius) d of the inclusion that was the origin of each breakage was obtained from an electron microscope photograph (SEM image) as shown in diagram (C) of Fig. 2. Fig. 3 shows a relationship between the stress $\tau$ at each breakage origin position and the size (radius) d of the inclusion obtained thus. It was found that the lower limit at which a fracture does not occur is obtained from the following formula (1):

$$d = 64729(Pmax/4)^{-1.441} \quad (1).$$

In the case where the radius of the non-metallic inclusion of the steel material is not greater than the radius d determined by the above formula (1), when the steel material is used for a rolling component, even if such a rolling component is used in a hydrogen entry environment, the rolling component is not fractured due to rolling fatigue.

The maximum contact surface pressure Pmax acting on a rolling surface of the rolling component is determined on the basis of the use of the rolling component, and is set, for example, to the following value for each use. When the maximum contact surface pressure Pmax is determined, the maximum value of the radius d of the inclusion is also determined as follows.

(1) In a bearing ring and a rolling element of a rolling bearing used in electrical auxiliary equipments (lighting, an air-conditioner, a wiper, a power window etc.); maximum contact surface pressure Pmax is 2.0 GPa, and maximum value of the radius d of the inclusion is 8.4 $\mu$m.

(2) In a bearing ring and a rolling element of a turning seat bearing in construction machines; maximum contact surface pressure Pmax is 3.5 GPa, and maximum value of the radius d of the inclusion is 3.7 $\mu$m.

(3) In a screw shaft, a nut, and a ball of a ball screw in CVTs (continuously variable transmission); maximum contact surface pressure Pmax is 2.7 GPa, and maximum value of the radius d of the inclusion is 5.4 $\mu$m.

(4) In a bearing ring and a rolling element of a main shaft bearing in machine tools; maximum contact surface pressure Pmax is 2.0 GPa, and maximum value of the radius d of the inclusion is 8.4 μm.

(5) In a bearing ring and a rolling element of a rolling bearing used as a main shaft bearing of windmills; maximum contact surface pressure Pmax is 2.5 GPa, and maximum value of the radius d of the inclusion is 6.1 μm.

(6) In a bearing ring and a rolling element of a rolling bearing used in acceleration and deceleration machines in windmill generators; maximum contact surface pressure Pmax is 2.5 GPa, and maximum value of the radius d of the inclusion is 6.1 μm.

The method of the hydrogen-charged ultrasonic torsional fatigue test used in the above test will be described.

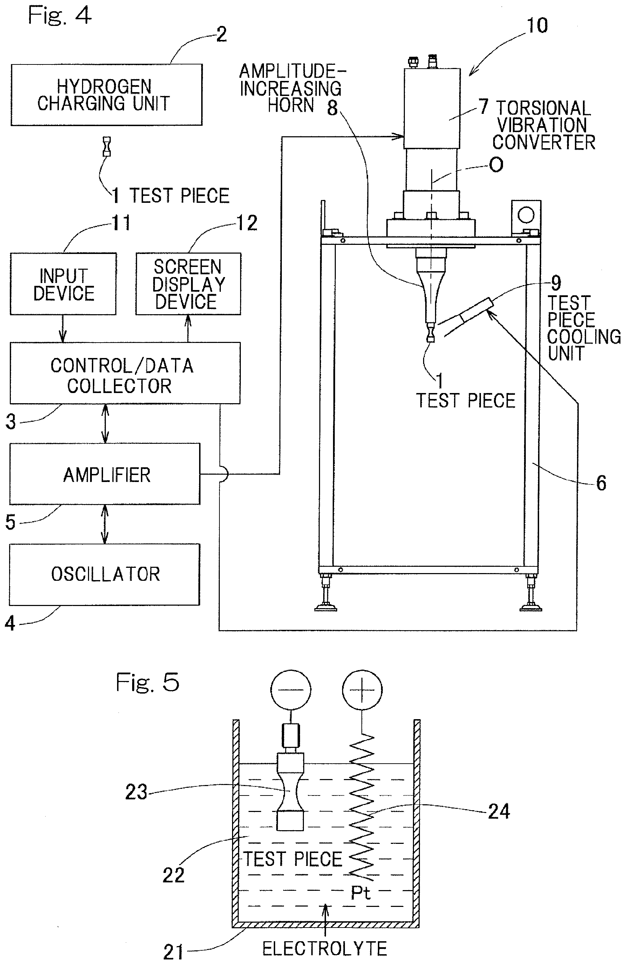

In this test, as shown in Fig. 4, hydrogen charging unit 2 for charging hydrogen to a test piece 1 made of the rolling component material is included, and with the use of a testing apparatus, completely-alternating ultrasonic torsional vibration is applied to the test piece 1 after the hydrogen charging, and data of the rolling component material is collected in a hydrogen entry environment.

The hydrogen charging is performed on the test piece 1 by cathode electrolytic charging as described below. The cathode electrolytic hydrogen charging is performed as shown in Fig. 5, by immersing a platinum electrode 24 and a test piece 23 into an electrolyte 22 within a container 21 and applying a voltage with the test piece 23 as a negative side and the electrode 24 as a positive side.

Fig. 4 shows a shear fatigue characteristic evaluation apparatus that applies completely-alternating ultrasonic torsional vibration to the test piece 1. The apparatus includes: a test device body 10 including a torsional vibration converter 7 and an amplitude-increasing horn 8; an oscillator 4; an amplifier 5; and control/data collector 3.

In the test device body 10, the amplitude-increasing horn 8 is mounted to the torsional vibration converter 7 installed on an upper portion of a frame 6, such that the amplitude-increasing horn 8 projects downward. The test piece 1 is detachably attached to the distal end of the amplitude-increasing horn 8. Ultrasonic vibration generated by the torsional vibration converter 7 is expanded as vibration in forward and reverse rotation directions about an axis O of the amplitude-increasing horn 8, and then, is transmitted to the test piece 1. The test device body 10 includes a test piece cooling unit 9 that forcedly cools the test piece 1. The test piece cooling unit 9 is composed of, for example, a nozzle that is connected to a compressed air generating source (not shown) of a blower via a pipe and through which air is blown to the test piece 1. Switching between air blowing and cessation of blowing can be performed by an electronic valve (not shown) or by turning on/off the compressed air generating source.

The torsional vibration converter 7 is operable to generate torsional vibration that causes forward and reverse rotation about the rotation axis O at the frequency of the AC power when two-phase AC power is applied thereto. The AC power applied to the torsional vibration converter 7 is AC power in which a voltage has positive/negative symmetry as in a sine wave, and the generated torsional vibration is completely-alternating vibration, that is, vibration that is symmetrical in the forward rotation direction and in the reverse rotation direction.

The amplitude-increasing horn 8 is formed in a tapered shape, and has, at a distal end surface thereof, a mount portion composed of a female screw hole to which a test piece is concentrically attached. The amplitude-increasing horn 8 is fixed at a proximal end thereof to the torsional vibration converter 7. The amplitude-increasing horn 8 changes the amplitude of the torsional vibration applied from the torsional vibration converter 7 to generate the proximal end thereof, to increased amplitude at the distal end thereof. The material of the amplitude-increasing horn 8 is, for example, a titanium alloy.

The oscillator 4 includes an electronic device generating a voltage signal of a frequency in the ultrasonic region that is to be a frequency at which the amplitude-increasing horn 8 is vibrated. The oscillatory frequency of the oscillator 4 is fixed or is adjustable, for example, within the range of 20000±500Hz.

The amplifier 5 is composed of an electronic device that amplifies output of the oscillator 4 and then applies AC power having a frequency in the ultrasonic region to the torsional vibration converter 7. The magnitude of output of the AC power and ON/OFF of the amplifier 5 are controllable by an external input.

The control/data collector 3 provides an input for control of the magnitude of the output, ON/OFF, or the like, to the amplifier 5, and also collects, from the amplifier 5, data including the vibration frequency, a state of the output of the amplifier 5 or the like, and the number of times of load application (the number of cycles) during the test. The control/data collector 3 further has a function to control the test piece cooling unit 9. The control/data collector 3 includes a computer such as a personal computer and a program (not shown) to be executed by the computer. An input device 11 such as a keyboard and a mouse and a screen display device 12 such as a liquid crystal display device which displays an image are connected to the control/data collector 3. Each of the input device 11 and the screen display device 12 may be provided as a part of the computer.

According to the test method described above, the ultrasonic torsional fatigue test is carried out in which ultrasonic torsional vibration having a vibration frequency in the ultrasonic region is applied to a test piece. Therefore, a torsional fatigue test can be carried out in which a load is repeatedly applied at a very high speed. Thus, before charged hydrogen is scattered, shear fatigue can be applied to a test piece made of a metallic material to be evaluated, and therefore, a shear fatigue characteristic in a hydrogen entry environment can be rationally and rapidly evaluated. For example, when vibration is continuously applied at 20000 Hz, the number of times of load application reaches $10^7$ times only in 8.3 min. Since the test piece is resonated, shear fatigue fracture can be efficiently caused to occur by input of small energy.

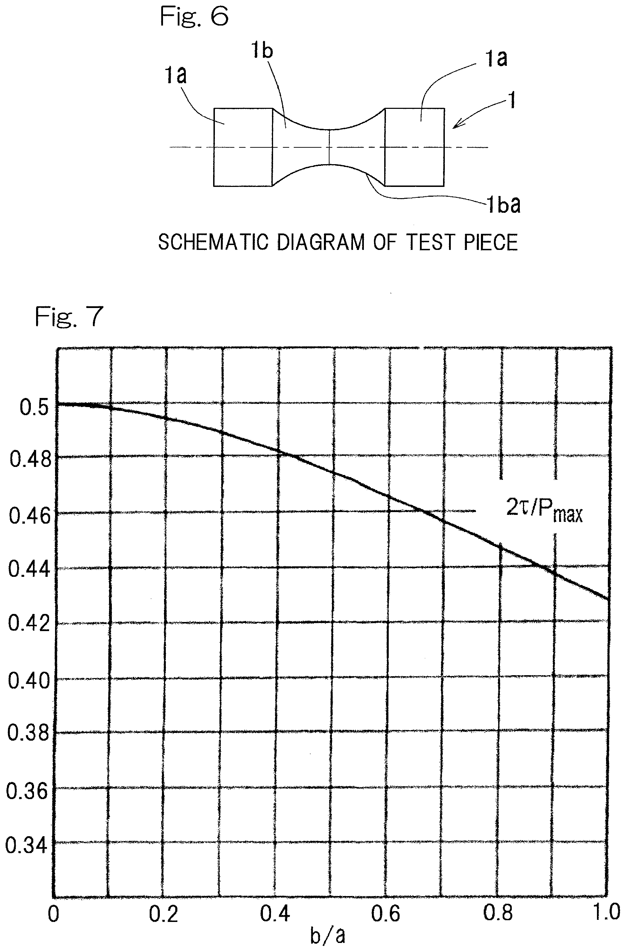

Fig. 6 shows a schematic diagram of the test piece 1. Although not shown in Fig. 6, a male screw portion for fixing to the distal end of the amplitude-increasing horn 8 is provided at one end of the actual test piece 1. The test piece 1 has a dumbbell shape including cylindrical shoulder portions 1a, 1a at both ends and an intermediate thin portion 1b that is connected to the shoulder portions 1a, 1a at both sides. The thin portion 1b has a cross-sectional shape along an axial direction including a circular art curve 1ba. However, the shape of the test piece 1 is not limited thereto.

The present invention is not limited to the above-described embodiment, and various additions, changes, or deletions can be made without departing from the present invention. The invention is defined by appended claims.

Reference Numerals

1    test piece
2    hydrogen charging unit
4    oscillator
6    frame
7    torsional vibration converter
8    amplitude-increasing horn

**Claims**

1. A method for selecting a steel material for a rolling component to be used in an environment in which hydrogen enters steel, the method comprising:

   determining a maximum contact surface pressure Pmax acting on a rolling surface of the rolling component, the maximum contact surface pressure (Pmax) being determined on the basis of the use of the rolling component; and
   using, as a material for the rolling component, a material whose non-metallic inclusion has a radius not greater than a radius d determined by the following formula (1) and not less than 1.0 $\mu$m, so that the rolling component is not fractured due to rolling fatigue even if the rolling component is used in the hydrogen entry environment,

$$d = 64729(\text{Pmax}/4)^{-1.441} \quad (1).$$

2. A method for manufacturing a rolling component made of a steel material to be used in an environment in which hydrogen enters steel, the method comprising
   selecting the steel material by using the method for selecting the rolling component material as claimed in claim 1.

3. A method for manufacturing a bearing ring of a rolling bearing to be used in an environment in which hydrogen enters steel, the method comprising

   selecting a steel material for the bearing ring by the method for selecting the rolling component material as claimed in claim 1, wherein the maximum contact surface pressure Pmax is 1.0 GPa.

4. A method for manufacturing a rolling element of a rolling bearing to be used in an environment in which hydrogen enters steel, the method comprising

   selecting a steel material for the rolling element by the method for selecting the rolling component material as claimed in claim 1, wherein the maximum contact surface pressure Pmax is 1.0 GPa.

5. A rolling component material that is a steel material for a rolling component to be used in an environment in which hydrogen enters steel, manufactured by the method of claim 1, wherein

   a non-metallic inclusion of the steel material has a radius not greater than a radius d determined by the following formula (1) and not less than 1.0 $\mu$m, where Pmax is a maximum contact surface pressure acting on a rolling surface of the rolling component,

$$d = 64729(\text{Pmax}/4)^{-1.441} \quad (1),$$

   the maximum contact surface pressure (Pmax) is determined on the basis of the use of the rolling component, and
   even if the rolling component is used in the hydrogen entry environment, the rolling component is not fractured due to rolling fatigue.

6. A rolling component made of the rolling component material as claimed in claim 5.

7. A bearing ring of a rolling bearing that is the rolling component as claimed in claim 6, wherein

the maximum contact surface pressure Pmax is 1.0 GPa.

8. A rolling element of a rolling bearing that is the rolling component as claimed in claim 6, wherein the maximum contact surface pressure Pmax is 1.0 GPa.

**Patentansprüche**

1. Verfahren zum Auswählen eines Stahlwerkstoffs für ein Wälzlagerbauteil, das in einer Umgebung verwendet werden soll, in der Wasserstoff in den Stahl eindringt, wobei das Verfahren umfasst:

   Feststellen eines maximalen Kontaktflächendrucks Pmax, der auf eine Lauffläche des Wälzlagerbauteils wirkt, wobei der maximale Kontaktflächendruck (Pmax) anhand der Verwendung des Wälzlagerbauteils bestimmt wird; und Verwenden eines Materials als Werkstoff für das Wälzlagerbauteil, dessen nicht-metallischer Einschluss einen Radius aufweist, der nicht größer als ein Radius d ist, der durch die folgende Formel (1) bestimmt wird und nicht kleiner als 1,0 $\mu$m ist, so dass das Wälzlagerbauteil nicht aufgrund von Wälzermüdung bricht, selbst wenn das Wälzlagerbauteil in der Umgebung verwendet wird, in der Wasserstoff eindringt, wobei

$$d = 64729(Pmax/4)^{-1,441} \qquad (1).$$

2. Verfahren zur Herstellung eines Wälzlagerbauteils aus einem Stahlwerkstoff zur Verwendung in einer Umgebung, in der Wasserstoff in den Stahl eindringt, wobei das Verfahren umfasst:
   Auswählen des Stahlwerkstoffs unter Verwendung des Verfahrens zur Auswahl des Werkstoffs für das Wälzlagerbauteil gemäß Anspruch 1.

3. Verfahren zur Herstellung eines Lagerrings eines Wälzlagers, das in einer Umgebung eingesetzt werden soll, in der Wasserstoff in den Stahl eindringt, wobei das Verfahren umfasst:

   Auswählen eines Stahlwerkstoffs für den Lagerring nach dem Verfahren zur Auswahl des Werkstoffs des Wälzlagerbauteils gemäß Anspruch 1, wobei
   der maximale Kontaktflächendruck Pmax 1,0 GPa beträgt.

4. Verfahren zur Herstellung eines Wälzkörpers eines Wälzlagers, das in einer Umgebung verwendet werden soll, in der Wasserstoff in den Stahl eindringt, wobei das Verfahren umfasst:

   Auswählen eines Stahlwerkstoffs für den Wälzkörper nach dem Verfahren zur Auswahl des Werkstoffs des Wälzlagerbauteils gemäß Anspruch 1, wobei
   der maximale Kontaktflächendruck Pmax 1,0 GPa beträgt.

5. Wälzlagerwerkstoff, der ein Stahlwerkstoff für ein Wälzlagerbauteil ist, das in einer Umgebung eingesetzt werden soll, in der Wasserstoff in den Stahl eindringt, hergestellt nach dem Verfahren gemäß Anspruch 1, wobei

   ein nicht-metallischer Einschluss des Stahlwerkstoffs einen Radius aufweist, der nicht größer ist als ein Radius d, der durch die folgende Formel (1) bestimmt wird, und nicht kleiner als 1,0 $\mu$m, wobei Pmax ein maximaler Kontaktflächendruck ist, der auf eine Lauffläche des Wälzlagerbauteils wirkt,

$$d = 64729(Pmax/4)^{-1,441} \qquad (1),$$

   der maximale Kontaktflächendruck (Pmax) anhand der Verwendung des Wälzlagerbauteils bestimmt wird, und
   auch wenn das Wälzlagerbauteil in der Umgebung eingesetzt wird, in der Wasserstoff in den Stahl eindringt, das Wälzlagerbauteil nicht aufgrund von Wälzermüdung bricht.

6. Wälzlagerbauteil, hergestellt aus dem Wälzlagerwerkstoff nach Anspruch 5.

7. Lagerring eines Wälzlagers, der das Wälzlagerbauteil nach Anspruch 6 ist, wobei
   die maximale Kontaktflächenpressung Pmax 1,0 GPa beträgt.

8. Wälzkörper eines Wälzlagers, der das Wälzlagerbauteil nach Anspruch 6 ist, wobei
   der maximale Kontaktflächendruck Pmax 1,0 GPa beträgt.

**Revendications**

1. Procédé de sélection d'un matériau en acier pour un élément de roulement à utiliser dans un environnement dans lequel de l'hydrogène pénètre dans de l'acier, le procédé consistant à :

   déterminer une pression de surface de contact maximale Pmax agissant sur une surface de roulement de l'élément de roulement, la pression de surface de contact maximale (Pmax) étant déterminée sur la base de l'utilisation de l'élément de roulement ; et

utiliser, en tant que matériau pour l'élément de roulement, un matériau dont l'inclusion non métallique a un rayon non supérieur à un rayon d déterminé selon l'équation suivante (1) et non inférieur à 1,0 μm de sorte que l'élément de roulement n'est pas fracturé en raison de la fatigue de roulement même si l'élément de roulement est utilisé dans l'environnement de pénétration d'hydrogène,

$$d = 64729(Pmax/4)^{-1,441} \ (1).$$

2. Procédé de fabrication d'un élément de roulement constitué d'un matériau en acier à utiliser dans un environnement dans lequel de l'hydrogène pénètre dans de l'acier, le procédé consistant à sélectionner le matériau en acier en utilisant le procédé de sélection du matériau d'élément de roulement selon la revendication 1.

3. Procédé de fabrication d'une bague de roulement d'un palier de roulement à utiliser dans un environnement dans lequel de l'hydrogène pénètre dans de l'acier, le procédé consistant à

sélectionner un matériau en acier pour la bague de roulement selon le procédé de sélection du matériau d'élément de roulement selon la revendication 1, en ce que
la pression de surface de contact maximale Pmax est 1,0 GPa.

4. Procédé de fabrication d'un élément de roulement d'un palier de roulement à utiliser dans un environnement dans lequel de l'hydrogène pénètre dans de l'acier, le procédé consistant à

sélectionner un matériau en acier pour l'élément de roulement selon le procédé de sélection du matériau d'élément de roulement selon la revendication 1, en ce que
la pression de surface de contact maximale Pmax est 1,0 GPa.

5. Matériau d'élément de roulement qui est un matériau en acier pour un élément de roulement à utiliser dans un environnement dans lequel de l'hydrogène pénètre dans de l'acier, fabriqué selon le procédé de la revendication 1, en ce que

une inclusion non métallique du matériau en acier a un rayon qui n'est pas supérieur à un rayon d déterminé selon l'équation suivante (1) et n'est pas inférieur à 1,0 μm, Pmax étant une

pression de surface de contact maximale agissant sur une surface de roulement de l'élément de roulement,

$$d = 64729(Pmax/4)^{-1,441} \ (1),$$

la pression de surface de contact maximale (Pmax) est déterminée sur la base de l'utilisation de l'élément de roulement, et
même si l'élément de roulement est utilisé dans l'environnement de pénétration d'hydrogène, l'élément de roulement n'est pas fracturé en raison de la fatigue de roulement.

6. Élément de roulement constitué du matériau d'élément de roulement selon la revendication 5.

7. Bague de roulement d'un palier de roulement qui est l'élément de roulement selon la revendication 6, en ce que
la pression de surface de contact maximale Pmax est 1,0 GPa.

8. Élément de roulement d'un palier de roulement qui est l'élément de roulement selon la revendication 6, en ce que
la pression de surface de contact maximale Pmax est 1,0 GPa.

Fig. 1

Fig. 2

(A)

(B)

(C)

Fig. 3

$$d = 64729 \, \tau^{-1.441}$$

Fig. 4

Fig. 5

Fig. 6

SCHEMATIC DIAGRAM OF TEST PIECE

Fig. 7

Fig. 8

ROLLING DIRECTION

CONTACT SURFACE

INCLUSION

0.1mm

Fig. 9

MODE II

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014165924 A
- US 5108491 A

- JP 2011191254 A

**Non-patent literature cited in the description**

- **TEDRIC A. HARRIS.** Rolling Bearing Analysis. John Wiley & Sons, Inc, 2001, 211